# FASCICULE DE BREVET EUROPEEN

(11) **EP 0 283 353 B1**
(45) Date de publication et mention de la délivrance du brevet: **09.06.1993**
(21) Numéro de dépôt: 88400409.4
(22) Date de dépôt: 23.02.1988
(51) Int. Cl.: G01S 5/14, G01S 1/56

(54) **Système d'aide à l'atterrissage mettant en oeuvre des satellites de navigation**
Landehilfssystem unter Verwendung von Navigationssatelliten
Landing aid system using navigation satellites

(30) Priorité: 27.02.1987 FR 8702648
(43) Date de publication de la demande: 21.09.1988
(73) Titulaire: LMT RADIO PROFESSIONNELLE, 92103 Boulogne-Billancourt (FR)
(72) Inventeur: Joguet, Jean-Claude, F-75008 Paris (FR); Schilliger, Michel, F-75008 Paris (FR)
(74) Mandataire: Courtellemont, Alain

(56) Documents cités:
- WO-A-87/07030
- IEEE PLAN '86 POSITION LOCATION AND NAVIGATION SYMPOSIUM, Las Vegas, NV, 4-7 novembre 1986, pages 297-302, IEEE, New York, US; K. HERVIG: "Diffstar - A project based on differential GPS in northern Norway"
- NATIONAL TELECOMMUNICATIONS CONFERENCE, Houston, Texas, 30 novembre - 4 décembre 1980, vol. 1, pages 21.1.1-21.1.6, New York, US; J. REYNOLDS et al.: "Navstar global positioning systems"
- IEEE PLANS '86 POSITION LOCATION AND NAVIGATION SYMPOSIUM, Las Vegas, NV, 4-7 novembre 1986, pages 169-176, IEEE, New York, US; J. BESER: "Highly accurate hydrographic surveys using differential GPS"
- NATIONAL TELECOMMUNICATIONS CONFERENCE, Houston, Texas, 30 novembre - 4 décembre 1980, vol. 1, pages 21.3.1-21.3.7, IEEE, New York, US; A. VAN LEEUWEN: "Space shuttle application of a GPS navigation system"
- IEEE PLANS '86 POSITION LOCATION AND NAVIGATION SYMPOSIUM, Las Vegas, NV, 4-7 novembre 1986, pages 330-342, IEEE, New York, US; M.B. EL-ARINI et al.: "Integrity of the microwave landing system (MLS) data functions"

## Description

L'invention concerne un système d'aide à l'atterrissage pour aéronefs.

Le système d'aide à l'atterrissage le plus récent et qui est normalisé, est un système d'atterrissage à micro-ondes, appelé MLS. Il comporte deux faisceaux étroits de micro-ondes, réalisant respectivement un balayage vertical et un balayage horizontal dans le prolongement d'une piste d'atterrissage. Ces deux faisceaux permettent de déterminer la position d'un aéronef respectivement dans un plan vertical et dans un plan horizontal. Ce système MLS équipe ou équipera couramment les grands aéroports, mais il a l'inconvénient de nécessiter une infrastructure complexe pour chaque piste. Cette infrastructure est trop coûteuse pour les petits aéroports, d'une part, et, d'autre part, trop complexe pour être installée rapidement auprès d'une piste d'atterrissage militaire pour des besoins tactiques.

Par ailleurs, on connaît des systèmes de positionnement très précis mettant en oeuvre des satellites de navigation tels que ceux du système de positionnement appelé NAVSTAR/GPS. Un tel système comporte une pluralité de satellites, chaque satellite émettant des signaux pilotés par une horloge atomique et constitués notamment par des données d'almanach permettant de connaître la position du satellite par rapport à un repère géodésique. Un récepteur de positionnement, embarqué dans un aéronef par exemple, permet de déterminer la position de cet aéronef en recevant simultanément les signaux émis par plusieurs satellites situés en vue directe à un instant donné. Une constellation de 18 satellites est prévue afin de permettre la réception de quatre ou cinq satellites à tout instant en tout point de la terre. Chaque récepteur de positionnement comporte un dispositif de calcul permettant de calculer la position de l'aéronef dans trois dimensions et à une cadence élevée, en utilisant toutes les informations de phase cumulée de la porteuse émise par chaque satellite et en utilisant la phase d'un code modulant cette porteuse.

Un procédé différentiel, décrit, par exemple, dans "IEEE plan 86, Position location and navigation symposium", pages 297-302 dans une communication intitulée "DIFFSTAR - A PROJECT BASED ON DIFFERENTIEL GPS IN NORTHERN NORWAY" pour une application au positionnement de bateaux, ou dans la revue française NAVIGATION n^{o} 137, pages 88 à 91, janvier 1987 pour une application au positionnement des aéronefs, permet d'améliorer la précision du positionnement réalisé au moyen du système GPS. Par ce procédé différentiel, la précision obtenue est de l'ordre de 3 mètres en moyenne et permet d'envisager l'utilisation du système GPS comme aide à l'atterrissage des aéronefs. Selon ce procédé différentiel appliqué au positionnement des aéronefs, le système comporte une station fixe constituant une référence pour les aéronefs situés au voisinage de la station fixe, dans un rayon de 100 kilomètres par exemple. La station fixe comporte un récepteur de positionnement par satellites, fournissant une estimation de la position de cette station fixe, et des moyens de calcul fournissant des données de correction traduisant l'écart entre cette estimation et une position de référence qui peut être la position de la station fixe, relevée sur une carte. Après suppression de l'essentiel du décalage de l'horloge incorporée au récepteur de la station fixe, les distances observées pour chaque satellite, et qui sont appelées pseudo-distances, sont comparées aux distances exactes calculées à partir des données d'almanach transmises par les satellites et à partir de la position de référence. Le résultat de ces calculs fournit des données de correction permettant de compenser la plupart des erreurs provenant des éphémérides des satellites et provenant des incertitudes de propagation des ondes radio.

La station fixe comporte en outre des moyens de transmission radio pour transmettre les données de correction aux aéronefs. La station embarquée à bord de chaque aéronef comporte, en plus du récepteur de positionnement par satellite, des moyens de réception radio pour recevoir les données de correction, et des moyens de calcul pour corriger, au moyen des données de correction, l'estimation de position fournie par le récepteur de positionnement. Ce dispositif de calcul peut être incorporé au récepteur de positionnement qui est alors appelé récepteur de positionnement différentiel et qui fournit directement la valeur de l'estimation corrigée.

L'estimation corrigée a une précision suffisante pour être utilisable pour guider un atterrissage mais nécessite un matériel complémentaire de réception. Cependant il n'est pas souhaitable, pour des raisons d'encombrement et de coût, d'augmenter la quantité de matériel équipant les aéronefs, pour leur permettre d'utiliser un autre système d'aide à l'atterrissage, complémentaire du système MLS.

Le but de l'invention est de proposer un système d'aide à l'atterrissage permettant de remplacer le système MLS pour les pistes d'atterrissage qui ne peuvent pas être équipées avec ce système, sans augmenter notablement le coût des matériels de navigation et d'aide à l'atterrissage déjà utilisés à bord des aéronefs. L'objet de l'invention est un système comportant essentiellement, à bord de chaque aéronef, un récepteur classique prévu pour l'aide à l'atterrissage de type MLS, et un récepteur de positionnement par satellite, classique, de type GPS.

Selon l'invention, un système d'aide à l'atterrissage mettant en oeuvre des satellites de navigation, comportant : une pluralité de satellites de navigation émettant des signaux pilotés par une horloge ; une station fixe située à proximité des pistes d'atterrissage ; et une station embarquée à bord de chaque aéronef ; caractérisé en ce que la station fixe comporte :
- un récepteur de positionnement par satellites, fournissant une estimation de la position de cette station fixe, et des moyens de calcul fournissant des données de correction traduisant l'écart entre cette estimation et une position de référence ;
- des moyens de transmission radio pour transmettre d'une part les données de correction et d'autre part des données propres au lieu d'atterrissage, dans un canal radio conformément aux normes du système d'atterrissage à micro-ondes, dit MLS ;
   et en ce que la station embarquée comporte :
- un récepteur radio classique pour la réception des données transmises par un système d'atterrissage à micro-ondes dit MLS ;
- un récepteur de positionnement par satellites et des moyens de calcul fournissant une estimation de la position de l'aéronef, corrigée au moyen des données de correction reçues par le récepteur radio ;
- et un calculateur de bord qui détermine les informations de guidage pour l'atterrissage à partir de l'estimation corrigée de la position de l'aéronef et des données propres au lieu d'atterrissage reçues par le récepteur radio.

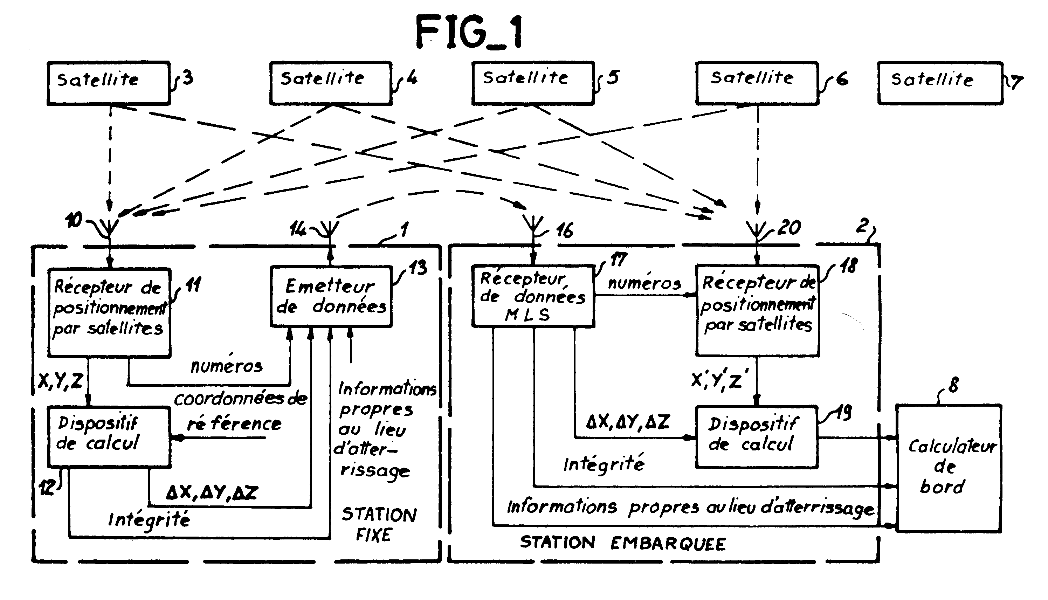

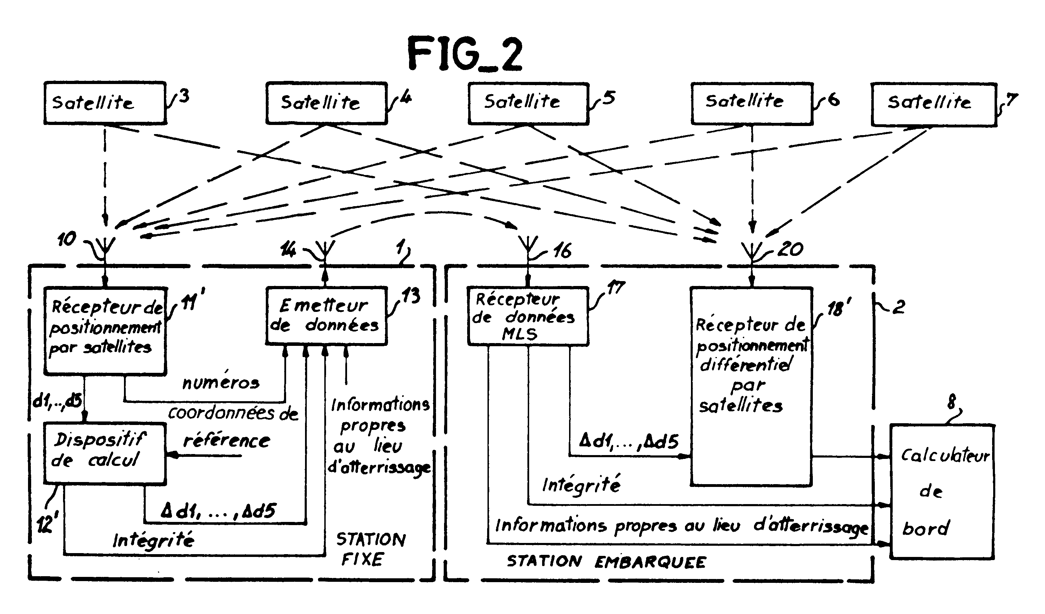

L'invention sera mieux comprise et d'autres détails apparaîtront dans la description, ci-dessous, de deux exemples de réalisation du système selon l'invention, et à l'aide des figures 1 et 2 représentant des schémas synoptiques de ces deux exemples de réalisation.

L'exemple de réalisation représenté sur la figure 1 comporte : une pluralité de satellites du système GPS/NAVSTAR, 3 à 7 ; une station fixe 1 qui constitue la station de référence ; et une station 2 embarquée à bord d'un aéronef non représenté. La station fixe 1 comporte : un récepteur 11 de positionnement par satellite, non différentiel ; un dispositif de calcul 12 ; et un émetteur de données 13.

Le récepteur 11 est un récepteur de positionnement par satellite GPS/NAVSTAR non différentiel, qui est par exemple un récepteur TRIMBLE 10X commercialisé par la société TRIMBLE. Il est relié à une antenne 10 pouvant recevoir les signaux émis par tous les satellites qui sont en vue directe. Il possède une première sortie reliée à une entrée du dispositif de calcul 12 pour lui fournir une estimation X, Y, Z des coordonnées géodésiques de la position de la station fixe 1, calculée de manière classique à partir des signaux reçus de quatre satellites, 3 à 6, parmi tous les satellites 3 à 7 qui sont en vue directe à l'instant considéré. Ce calcul consiste essentiellement à déterminer les pseudo-distances séparant la station fixe 1 par rapport à ces quatre satellites, 3 à 6, puis à en déduire les coordonnées géodésiques de la station fixe 1 à partir des données d'almanach transmises par ces satellites et qui permettent de connaître à chaque instant leur position par rapport à la terre. Le récepteur 11 possède une seconde sortie reliée à une entrée de l'émetteur de données 13 pour lui fournir les numéros des satellites dont les signaux sont utilisés pour estimer les coordonnées X, Y, Z.

Le dispositif de calcul 12 possède en outre une entrée recevant trois coordonnées de référence qui sont constantes. Il calcule l'écart entre ces coordonnées de référence et les coordonnées X, Y, Z, et en déduit des données de correction notées Δ X, Δ Y, Δ Z. Il possède une sortie reliée à une entrée de l'émetteur 13 pour lui fournir ces données de correction. Les coordonnées de référence peuvent être : soit la position géodésique exacte de la station fixe 1, si elle est connue ; soit celle déterminée par le récepteur 11 à un instant antérieur et mémorisée une fois pour toutes.

Le dispositif de calcul 12 est constitué par un dispositif de calcul classique à microprocesseur. Il a aussi pour fonction de fournir une information dite d'intégrité indiquant que les signaux des satellites utilisés pour déterminer les coordonnées X, Y, Z sont de qualité suffisante. Le dispositif 12 possède une sortie reliée à une entrée de l'émetteur 13 pour lui fournir cette information d'intégrité.

L'émetteur de données 13 possède une entrée recevant une suite d'informations propres au lieu d'atterrissage. Par exemple : l'angle de la direction d'une piste d'atterrissage par rapport au nord magnétique, les coordonnées du seuil de la piste, et l'identité de celle-ci. Les coordonnées du seuil de la piste, transmises par l'émetteur 13, doivent se rapporter au même repère de référence que les coordonnées de référence fournies au dispositif de calcul 12 de la station fixe 1. Les coordonnées transmises sont les coordonnées géodésiques du seuil de la piste dans les cas où les coordonnées de référence sont les coordonnées géodésiques de la station fixe 1. Les coordonnées transmises sont des coordonnées mesurées en utilisant le système selon l'invention, dans le cas où les coordonnées de référence sont des coordonnées mesurées au moyen du récepteur 11 de la station 1, à un instant antérieur, et mémorisées une fois pour toutes. Pour cela, un aéronef est placé au seuil de la piste et une série de mesures de position est effectuée avec une station embarquée.

L'émetteur 13 a une sortie reliée à une antenne 14 omnidirectionnelle dans le plan horizontal. Il émet sur un canal radio qui est dédié habituellement à la transmission des données auxiliaires pour le système d'aide à l'atterrissage de type MLS. L'émetteur 13 émet, selon le format normalisé pour le système MLS, les données constituées par : les données de correction Δ X, Δ Y, Δ Z ; l'information d'intégrité ; les numéros de satellites ; et les informations propres au lieu d'atterrissage. La fréquence du canal MLS utilisée par l'émetteur 13 est propre au lieu d'atterrissage.

La station embarquée 2 comporte : un récepteur de données, 17 ; un récepteur 18 de positionnement par satellite, non différentiel ; et un dispositif de calcul 19. Le récepteur de données 17 est un récepteur classique que comporte tout aéronef équipé du système d'aide à l'atterrissage du type MLS. Il est relié à une antenne 16 omnidirectionnelle dans le plan horizontal. Il est accordé, par le pilote de l'aéronef, sur la fréquence du canal MLS propre au lieu d'atterrissage. Il possède : une première sortie reliée à une entrée du récepteur 18 pour lui fournir les numéros des satellites qui ont été utilisés par la station fixe 1 pour l'estimation des coordonnées X, Y, Z. Il possède une deuxième sortie reliée à une entrée du dispositif de calcul 19 pour lui fournir les données de correction ΔX, ΔY, ΔZ ; une troisième sortie et une quatrième sortie reliées respectivement à deux entrées d'un calculateur de bord 8 situé à bord de l'aéronef considéré pour lui fournir l'information d'intégrité et les informations propres au lieu d'atterrissage.

Le récepteur 18 est relié à une antenne 20 lui permettant de recevoir tous les satellites, 3 à 7, qui sont en vue directe à l'instant considéré. Le récepteur 18 est un récepteur classique de positionnement non différentiel par satellite GPS/NAVSTAR. Il possède une sortie fournissant une estimation Xʹ, Yʹ, Zʹ, des coordonnées géodésiques de l'aéronef, à une entrée du dispositif de calcul 19. Le récepteur 18 peut être constitué par un récepteur TRIMBLE 10X, légèrement modifié car les numéros des satellites dont les signaux sont utilisés par le récepteur 18, ne sont pas entrés manuellement par un opérateur mais sont fournis par le récepteur 17. Cette modification n'est pas décrite car elle est à la portée de l'homme de l'art. Une sortie du dispositif de calcul 19 fournit une estimation corrigée des coordonnées géodésiques de la station embarquée 2, calculée selon un algorithme classique, à partir des données de correction ΔX, ΔY, ΔZ et de l'estimation Xʹ, Yʹ, Zʹ fournie par le récepteur 18.

Le calculateur de bord 8 reçoit donc des coordonnées très précises de la position de l'aéronef et l'information d'intégrité qui garantit la validité des signaux des satellites utilisés et des données de correction. Il reçoit en outre l'angle de la direction de la piste par rapport au nord magnétique, les coordonnées du seuil de la piste, et éventuellement toute autre information propre au lieu d'atterrissage. Le calculateur 8 est un calculateur de bord classique qui détermine des informations de guidage pour l'atterrissage. Ces informations sont fournies au pilote humain par un indicateur à aiguilles croisées, ou bien sont fournies au pilote automatique.

Les récepteurs de positionnement par satellites comportent classiquement, un dispositif de calcul à microprocesseur. Une variante de réalisation du système selon l'invention peut consister à utiliser le dispositif de calcul incorporé au récepteur 11 de la station fixe 1 pour constituer le dispositif de calcul 12, moyennant une modification de la programmation du microprocesseur qui réalise les calculs de position dans le récepteur 11.

De même, les calculs réalisés par le dispositif de calcul 19 de la station embarquée 2 peuvent être réalisés par le microprocesseur qui réalise les calculs de position dans le récepteur 18, moyennant une modification du programme de ce microprocesseur. Ce même microprocesseur peut être utilisé aussi pour effectuer certains des calculs de guidage, à la place du calculateur de bord 8.

La figure 2 représente le schéma synoptique d'un second exemple de réalisation du système selon l'invention. Il diffère du premier exemple de réalisation par le type des données de correction qui sont transmises de la station fixe 1 à la station embarquée 2. Dans la station fixe 1, le récepteur 11 est remplacé par un récepteur 11ʹ qui est un récepteur de positionnement par satellites, qui fournit, en plus de l'estimation des trois coordonnées X, Y, Z, une estimation des pseudo-distances mesurées entre la station fixe 1 et respectivement tous les satellites 3 à 7 qui sont en vue directe de la station fixe 1 à l'instant considéré.

Dans cet exemple, le récepteur 11ʹ fournit 5 valeurs de pseudo-distance : d1, ..., d5 correspondant respectivement aux satellites 3 à 7. Ces valeurs sont appliquées à une entrée d'un dispositif de calcul 12ʹ analogue au dispositif de calcul 12 mais fonctionnant selon un programme un peu différent pour déterminer des données de correction Δd1, ..., Δd5 traduisant l'écart entre l'estimation des pseudo-distances d1, ..., d5 et des valeurs de référence fixées qui sont calculées par le dispositif de calcul 12ʹ. Dans ce second exemple de réalisation, les valeurs de référence sont constituées par des valeurs vraies des pseudo-distances séparant la station fixe 1 des satellites 3 à 7, ces valeurs vraies étant calculées, à un instant donné, à partir de la position de chaque satellite et de la position de la station fixe 1. Comme dans le premier exemple de réalisation, le dispositif de calcul 12ʹ possède une entrée recevant trois coordonnées de référence fixées qui sont : soit les coordonnées géodésiques de la station 1 ; soit les coordonnées mesurées par le récepteur 11ʹ à un instant antérieur et mémorisées une fois pour toutes.

Le dispositif de calcul 12ʹ détermine, comme le dispositif de calcul 12, une information d'intégrité indiquant une bonne réception des signaux émis par les satellites et utilisée pour déterminer l'estimation des pseudo-distances d1, ..., d5.

Comme dans le premier exemple de réalisation, l'émetteur de données 13 émet sur un canal aux normes du système d'aide à l'atterrissage MLS et selon un format conforme à ces normes. Il transmet les données de correction pour tous les satellites en vue directe, l'information d'intégrité, les numéros des satellites correspondant aux données de correction, et des informations propres au lieu d'atterrissage.

La station embarquée 2 diffère de celle du premier exemple de réalisation par le fait que le récepteur 18 et les moyens de calcul 19 sont constitués par un récepteur 18ʹ de positionnement différentiel par satellite. Un tel récepteur possède une entrée pour des données de correction transmises par une station fixe de référence. Le récepteur 18ʹ reçoit les émissions de tous les satellites, 3 à 7, qui sont en vue directe et en sélectionne quatre pour faire une estimation de sa position. Il ne sélectionne pas forcément les mêmes que ceux sélectionnés par le récepteur 11ʹ pour déterminer sa position.

Un récepteur classique de positionnement différentiel par satellite GPS/NAVSTAR capable de corriger une estimation de sa position au moyen de données de correction transmises par une station fixe de référence peut être utilisé pratiquement sans modification. Par exemple, le récepteur 18ʹ peut être constitué par un récepteur de type TR-5S commercialisé par la société SERCEL (marque déposée).

Ce second exemple de réalisation nécessite un récepteur de positionnement différentiel dans chaque station embarquée 2, mais a pour avantage de fournir une meilleure précision de positionnement pour un récepteur car la correction est réalisée directement sur les pseudo-distances des satellites, avant filtrage et estimation de la position, contrairement au premier exemple de réalisation où la correction est réalisée après filtrage et estimation de la position. Un autre avantage réside dans l'absence de contrainte pour le choix des 4 satellites utilisés par le récepteur 18ʹ pour déterminer sa position.

Il est possible aussi de transmettre des données supplémentaires de correction, en plus des corrections sur les pseudo-distances, constituées par des corrections sur les pseudo-vitesses des satellites par rapport à la station fixe 1, les pseudo-vitesses vraies étant calculées par le dispositif de calcul 12 ou 12ʹ, à partir des données d'almanach des satellites. Des algorithmes connus permettent d'utiliser ces données de correction supplémentaires pour calculer avec plus de précision une estimation corrigée de la position de l'aéronef.

L'invention ne se limite pas aux deux exemples de réalisation décrits précédemment, de nombreux types de récepteurs de positionnement par satellites, différentiels ou non différentiels, peuvent être utilisés pour la réalisation du système selon l'invention. Dans tous les cas, la station embarquée présente l'avantage d'être réalisable au moyen d'un récepteur MLS et d'un récepteur de positionnement différentiel par satellite qui sont ou seront d'un usage courant à bord des aéronefs ; et la station fixe ne nécessite pas une installation complexe avec des antennes directives, ce qui permet de l'installer rapidement n'importe où. Son installation est donc beaucoup moins coûteuse que celle d'une station fixe MLS. En outre, une même station fixe peut être utilisée pour plusieurs pistes voisines, en émettant des paquets de données distincts pour chaque piste, dans le même canal MLS, contrairement au système MLS où une station fixe distincte est nécessaire pour chaque piste.

## Revendications

1. Système d'aide à l'atterrissage mettant en oeuvre des satellites de navigation, comportant : une pluralité de satellites de navigation (3 à 7) émettant des signaux pilotés par une horloge ; une station fixe (1) située à proximité des pistes d'atterrissage ; et une station (2) embarquée à bord de chaque aéronef ; caractérisé en ce que la station fixe (1) comporte :
- un récepteur (11) de positionnement par satellites, fournissant une estimation de la position de cette station fixe (1), et des moyens de calcul (12) fournissant des données de correction traduisant l'écart entre cette estimation et une position de référence ;
- des moyens de transmission radio (13) pour transmettre d'une part les données de correction et d'autre part des données propres au lieu d'atterrissage, dans un canal radio conformément aux normes du système d'atterrissage à micro-ondes, dit MLS ;
et en ce que la station embarquée (2) comporte :
- un récepteur radio (17) classique pour la réception des données transmises par un système d'atterrissage à micro-ondes dit MLS ;
- un récepteur (18) de positionnement par satellites et des moyens de calcul (19) fournissant une estimation de la position de l'aéronef, corrigée au moyen des données de correction reçues par le récepteur radio (17) ;
- et un calculateur de bord (8) qui détermine les informations de guidage pour l'atterrissage à partir de l'estimation corrigée de la position de l'aéronef et des données propres au lieu d'atterrissage reçues par le récepteur radio.

2. Système d'aide à l'atterrissage selon la revendication 1, caractérisé en ce que, dans la station fixe (1) le récepteur de positionnement par satellites est constitué par un récepteur classique (11) de positionnement non différentiel par satellites ;
en ce que l'estimation de la position de la station fixe (1), fournie par le récepteur (11) de positionnement, est constituée par une estimation des trois coordonnés géodésiques de la station fixe (1) ;
en ce que les données de correction sont constituées essentiellement par les écarts entre cette estimation et des valeurs de référence, et par des numéros identifiant les satellites (4 à 6) dont les émissions ont été utilisées pour l'estimation de la position de la station fixe (1) ;
en ce que, dans chaque station embarquée (2), le récepteur de positionnement par satellite est constitué par un récepteur classique (18) de positionnement non différentiel par satellites ;
et en ce que l'estimation corrigée de la position de la station embarquée (2) est constituée par une estimation corrigée des trois coordonnées géodésiques de la station embarquée (2), à partir des émissions des satellites désignés par les numéros transmis par la station fixe (1) et à partir des données de correction transmises par la station fixe (1) dans le canal radio conformément aux normes du système d'atterrissage MLS.

3. Système d'aide à l'atterrissage selon la revendication 1, caractérisé en ce que, dans la station fixe (1) l'estimation de la position de la station fixe (1), fournie par le récepteur (11') de positionnement par satellites est constituée par une estimation des pseudo-distances entre la station fixe (1) et chacun des satellites (3 à 7) du système, dont les émissions sont recevables par la station fixe (1) ;
en ce que les données de correction sont constituées essentiellement par les écarts entre cette estimation et des valeurs calculées à partir des valeurs de référence ;
et en ce que, dans chaque station embarquée (2), le récepteur de positionnement par satellites et les moyens de calcul sont constitués par un récepteur classique (18) de positionnement différentiel par satellites ;
et en ce que l'estimation corrigée de la position de la station embarquée (2) est réalisée par une estimation des pseudo-distances entre la station embarquée (2) et respectivement une pluralité de satellites (3 à 7) dont les émissions sont recevables par la station embarquée (2) ; l'estimation de ces pseudo-distances étant corrigée au moyen des données de correction transmises par la station fixe (1) sur un canal radio conformément aux normes du système d'atterrissage MLS.

4. Système d'aide à l'atterrissage, selon la revendication 1, caractérisé en ce que les informations propres au lieu d'atterrissage transmises par les moyens de transmission radio (13) comportent les coordonnées du seuil d'une piste d'atterrissage, ces coordonnées ayant été mesurées, dans un repère de référence de la station fixe (1), au moyen d'une station embarquée (2) à bord d'un aéronef placé sur ce seuil.

5. Système d'aide à l'atterissage, selon la revendication 1, caractérisé en ce qu'une même station fixe (1) est commune à plusieurs pistes d'atterrissage, cette station émettant, en plus des données de correction, les informations propres respectivement à chacune de ces pistes d'atterrissage.

## Claims

1. Landing aid system employing navigation satellites, comprising: a plurality of navigation satellites (3 to 7) transmitting signals driven by a clock; a fixed station (1) situated in proximity to the landing strips; and a station (2) installed on board each aircraft; characterised in that the fixed station (1) comprises:
- a satellite positioning receiver (11) supplying an estimate of the position of this fixed station (1), and calculating means (12) supplying correction data representing the offset between this estimate and a reference position;
- radio transmission means (13) for transmitting, on the one hand, the correction data and, on the other hand, data specific to the landing site, on a radio channel conforming to the standards of the microwave landing system, called MLS;
- and in that the installed station (2) comprises:
- a conventional radio receiver (17) for receiving data transmitted by a microwave landing system, called MLS;
- a satellite positioning receiver (18) and calculating means (19) supplying an estimate of the position of the aircraft, corrected by means of correction data received by the radio receiver (17);
- and an on-board computer (8) which determines the guidance information for landing on the basis of the corrected estimate of the position of the aircraft and of the data specific to the landing site received by the radio receiver.

2. Landing aid system according to Claim 1, characterised in that, in the fixed station (1), the satellite positioning receiver consists of a conventional, nondifferential satellite positioning receiver (11);
in that the estimate of the position of the fixed station (1) supplied by the positioning receiver (11), consists of an estimate of the three geodesic coordinates of the fixed station (1);
in that the correction data consist essentially of the offsets between this estimate and reference values, and by numbers identifying the satellites (4 to 6) whose transmissions have been used for estimating the position of the fixed station (1);
in that, in each installed station (2), the satellite positioning receiver consists of a conventional, non-differential satellite positioning receiver (18);
and in that the corrected estimate of the position of the installed station (2) consists of a corrected estimate of the three geodesic coordinates of the installed station (2), on the basis of transmissions from satellites designated by the numbers transmitted by the fixed station (1) and on the basis of correction data transmitted by the fixed station (1) on the radio channel conforming to the standards of the MLS landing system.

3. Landing aid system according to Claim 1, characterised in that, in the fixed station (1), the estimate of the position of the fixed station (1), supplied by the satellite positioning receiver (11') consists of an estimate of the pseudo-distances between the fixed station (1) and each of the satellites (3 to 7) of the system, whose transmissions are receivable by the fixed station (1);
in that the correction data consist essentially of the offsets between this estimate and values calculated from reference values;
and in that, in each installed station (2), the satellite positioning receiver and the calculating means consist of a conventional, differential satellite positioning receiver (18);
and in that the corrected estimate of the position of the installed station (2) is produced by an estimate of the pseudo-distances between the installed station (2) and respectively a plurality of satellites (3 to 7) whose transmissions are receivable by the installed station (2); the estimate of these pseudo-distances being corrected by means of correction data transmitted by the fixed station (1) on a radio channel conforming to the standards of the MLS landing system.

4. Landing aid system, according to Claim 1, characterised in that the information specific to the landing site transmitted by the radio transmission means (13) comprise the coordinates of the threshold of a landing strip, these coordinates having been measured, in a reference axis system of the fixed station (1), by means of an installed station (2) on board an aircraft placed on this threshold.

5. Landing aid system, according to Claim 1, characterised in that a single fixed station (1) is common to several landing strips, this station transmitting, in addition to the correction data, the information specific to each of the landing strips respectively.

## Patentansprüche

1. Landehilfssystem unter Verwendung von Navigationssatelliten mit einer Vielzahl von Navigationssatelliten (3 bis 7), die von einem Taktgeber gesteuerte Signale aussenden, einer feststehenden Station (1), die in der Nähe von Landepisten vorgesehen ist, und einer Station (2) an Bord eines jeweiligen Luftfahrzeugs, **dadurch gekennzeichnet,** daß die feststehende Station (1) folgendes enthält:
- einen Positionierungsempfänger (11) zur Positionierung mittels Satelliten, der eine Schätzung der Position dieser feststehenden Station (1) liefert, und Berechnungsmittel (12), die Korrekturdaten liefern, die den Abstand zwischen dieser Schätzung und einer Bezugsposition zum Ausdruck bringen;
- Radioübertragungsmittel (13), um einerseits die Korrekturdaten und andererseits für die landungsstelle charakteristische Daten in einem Radiokanal entsprechend den Normen des als MLS bezeichneten Mikrowellen-Landesystems zu übertragen;
und daß die an Bord gebrachte Station (2) folgendes enthält:
- einen Klassischen Radioempfänger (17) für den Empfang der von einem als MLS bezeichneten Mikrowellen-Landesystem übertragenen Daten;
- einen Positionierungsempfänger (18) für eine Positionierung mittels Satelliten und Berechnungsmittel (19), die eine Schätzung der Position des Luftfahrzeugs liefern, die mittels der von dem Radioempfänger (17) empfangenen Korrekturdaten korrigiert ist;
- und einen Bordrechner (8), der die Leitinformationen für die Landung ausgehend von der korrigierten Schätzung der Position des Luftfahrzeugs und den von dem Radioempfänger empfangenen, für die Landestelle charakteristischen Daten bestimmt.

2. Landehilfssystem nach Anspruch 1, **dadurch gekennzeichnet,** daß in der feststehenden Station (1) der Positionierungsempfänger für eine Positionierung mittels Satelliten durch einen herkömmlichen, nichtdifferentiellen Positionierungsempfänger für eine Positionierung mittels Satelliten gebildet ist;
daß die Schätzung der Position der feststehenden Station (1), die durch den Positionierungsempfänger (11) geliefert wird, durch eine Schätzung der drei geodätischen Koordinaten der feststehenden Station (1) gebildet ist;
daß die Korrekturdaten im wesentlichen durch die Abstände zwischen dieser Schätzung und Bezugswerten sowie durch Zahlen gebildet sind, die die Satelliten (4 bis 6) identifizieren, deren Ausstrahlungen für die Schätzung der Position der feststehenden Station (1) verwendet wurden;
daß in jeder an Bord gebrachten Station (2) der Positionierungsempfänger für eine Positionierung mittels Satelliten durch einen herkömmlichen, nichtdifferentiellen Positionierungsempfänger (18) für eine Positionierung mittels Satelliten gebildet ist;
und daß die korrigierte Schätzung der Position der an Bord gebrachten Station (2) durch eine korrigierte Schätzung der drei geodätischen Koordinaten der an Bord gebrachten Station (2) gebildet ist, ausgehend von den Ausstrahlungen der Satelliten, die durch die von der feststehenden Station (1) übertragenen Zählen angegeben sind und ausgehend von den Korrekturdaten, die von der feststehenden Station (1) in dem Radiokanal entsprechend den Normen des Landesystems MLS übertragen werden.

3. Landehilfssystem nach Anspruch 1, **dadurch gekennzeichnet,** daß in der feststehenden Station (1) die Schätzung der Position der feststehenden Station (1), die von dem Positionierungsempfänger (11') für eine Positionierung mittels Satelliten geliefert wird, durch eine Schätzung von Pseudoentfernungen zwischen der feststehenden Station (1) und jedem der Satelliten (3 bis 7) des Systems gebildet wird, deren Ausstrahlungen von der feststehenden Station (1) empfangen werden können;
daß die Korrekturdaten im wesentlichen durch die Abstände zwischen dieser Schätzung und den ausgehend von den Bezugswerten berechneten Werten gebildet sind;
daß in jeder an Bord gebrachten Station (2) der Positionierungsempfänger für eine Positionierung mittels Satelliten und die Berechnungsmittel durch einen herkömmlichen, differentiellen Positionierungsempfänger (18) für eine Positionierung mittels Satelliten gebildet sind;
und daß die korrigierte Schätzung der Position der an Bord gebrachten Station (2) durch eine Schätzung der Pseudoentfernungen zwischen der an Bord gebrachten Station (2) und einer Vielzahl von Satelliten (3 bis 7) verwirklicht ist, deren Ausstrahlungen von der an Bord gebrachten Station (2) empfangen werden können, wobei die Schätzung dieser Pseudoentfernungen mittels der Korrekturdaten korrigiert ist, die durch die feststehende Station (1) in einem Radiokanal entsprechend den Normen des Landesystems MLS übertragen werden.

4. Landehilfssystem nach Anspruch 1, **dadurch gekennzeichnet,** daß die für die Landestelle charakteristischen Informationen, die durch die Radioübertragungsmittel (13) übertragen werden, die Grenzkoordinaten einer Landepiste enthalten, wobei diese Koordinaten in einer Bezugsmarkierung der feststehenden Station (1) mittels einer Station (2) gemessen wurden, die an Bord eines Luftfahrzeugs über dieser Grenze war.

5. Landehilfssystem nach Anspruch 1, **dadurch gekennzeichnet,** daß eine gleiche feststehende Station (1) mehreren Landepisten gemeinsam ist, wobei diese Station zu den Korrekturdaten noch die jeweils für diese Landepisten charakteristischen Informationen aussendet.
